# EUROPEAN PATENT SPECIFICATION

(11) **EP 3 159 134 B1**
(45) Date of publication and mention of the grant of the patent: **28.10.2020**
(21) Application number: 14895043.9
(22) Date of filing: 18.06.2014
(51) Int. Cl.: B29C 45/74, B29C 45/20, B29C 45/14, B29L 31/34, H01M 2/02, H01M 10/0525

(54) **INJECTION MOLDING METHOD**
SPRITZGIESSVERFAHREN
PROCÉDÉ DE MOULAGE PAR INJECTION

(43) Date of publication of application: 26.04.2017
(73) Proprietor: Envision AESC Japan Ltd., Kanagawa 2520012 (JP)
(72) Inventor: OCHIAI, Kenichi, Atsugi-shi Kanagawa 243-0123 (JP)
(74) Representative: Grünecker Patent- und Rechtsanwälte PartG mbB
(86) International application number: PCT/JP2014/066117
(87) International publication number: WO 2015/193989

(56) References cited:
- JP-A- S5 845 037
- JP-A- H06 106 574
- JP-A- S62 124 919
- JP-A- S62 124 919
- JP-A- 2003 340 896
- JP-A- 2008 143 157
- US-A1- 2004 183 231
- US-A1- 2010 258 975
- US-A1- 2014 127 347

## Description

### [Technical Field]

The present invention relates to an injection molding method.

### [Background Art]

Method of manufacturing a molded resin article is known, in which a mixed resin is heated by a heater disposed at the outer circumferential part of a cylinder of an injection molding machine and the heated resin is injected into the molding cavity of a mold via its runner part and gate part (see).

JP2005-219324 A and US 2004/183231 A).

### [Summary of Invention]

### [Problems to be solved by Invention]

In the above technique, the mixed resin injected into the molding cavity shrinks with its volume when cooled, but the mixed resin also exists in the runner part and gate part thereby to prevent foams from being mixed into the molded resin article, and the manufacturing cycle of the molded resin article can be reduced. Unfortunately, however, the yield of the mixed resin will be low because the mixed resin remaining in the runner part and gate part after the manufacturing of the molded resin article may be scrapped.

Problems to be solved by the present invention include providing an injection molding method that can prevent foams from being mixed into the molded article, can reduce the manufacturing cycle of the molded article, and can suppress the reduction in the yield of the resin material.

### [Means for solving problems]

In the present invention, the above problems are solved by providing an injection molding method comprising: a filling step of pressing a nozzle in a state in which at least a part thereof is heated against an inlet of a mold and filling a molding cavity of the mold with a resin material in a molten state from the nozzle; and a waiting step of, after the filling step, waiting until a temperature of a front end of the nozzle becomes equal to or lower than a melting point of the resin material in a state in which the nozzle remains pressed against the inlet.

### [Effect of Invention]

According to the present invention, at least a part of the nozzle is heated and the temperature of the nozzle can thereby be efficiently increased when the manufacturing of a molded article is initiated. This can reduce the manufacturing cycle of the molded article. Moreover, in the waiting step, the nozzle is in the state in which the nozzle remains pressed against the inlet. The nozzle can thereby be rapidly cooled and the resin material in the vicinity of the inlet can also be rapidly cooled to a temperature equal to or lower than the melting point and solidified. This rapid cooling for solidification can prevent foams from being mixed into the molded article. Furthermore, provision of a runner part and gate part in the mold can be omitted to improve the yield of resin material used in the injection molding.

### [Brief Description of Drawings]

FIG. 1 is a perspective view illustrating a single battery cell according to one or more embodiments of the present invention.
FIG. 2 is a cross-sectional view of a cell main body along line II-II of FIG. 1.
FIG. 3 is a cross-sectional view along line III-III of FIG. 1.
FIG. 4 is a plan view of an injection molding apparatus used in the injection molding method according to one or more embodiments of the present invention.
FIG. 5 is a flowchart illustrating the injection molding method according to one or more embodiments of the present invention.
FIG. 6(A) to FIG. 6(F) are cross-sectional views for explaining the injection molding method according to one or more embodiments of the present invention.
FIG. 7 is an enlarged view of area VII of FIG. 6(C).
FIG. 8 is a graph illustrating the temperature change of a nozzle in the injection molding method according to one or more embodiments of the present invention.

### [Mode(s) for Carrying out the Invention]

Hereinafter, one or more embodiments of the present invention will be described with reference to the drawings.

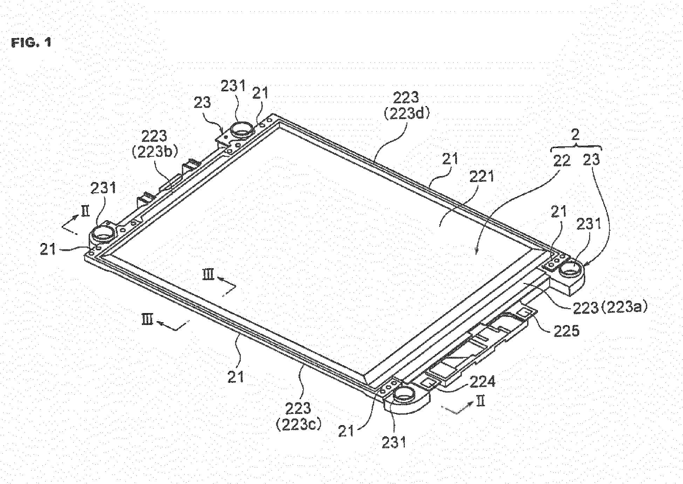

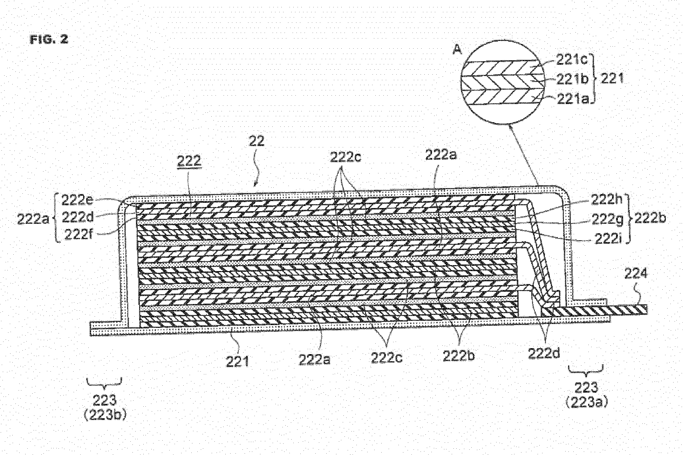

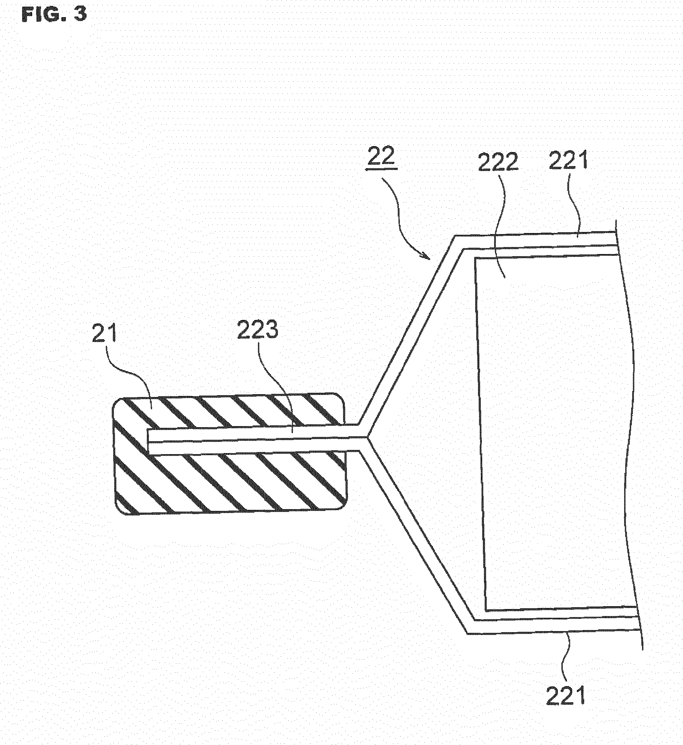

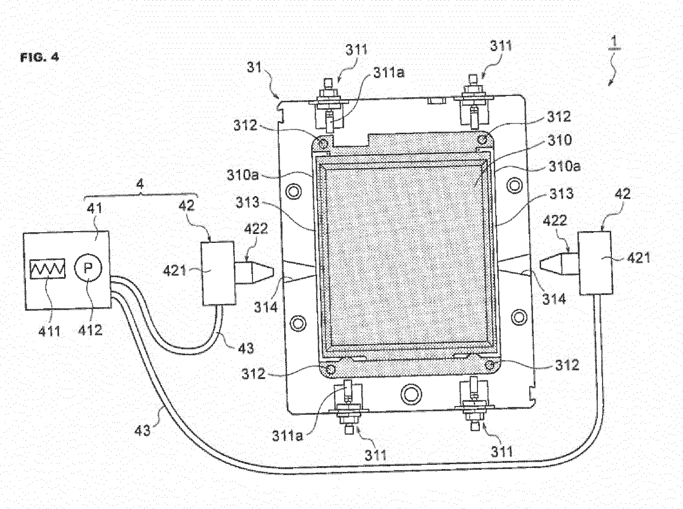

FIG. 1 is a perspective view illustrating a single battery cell according to one or more embodiments of the present invention, FIG. 2 is a cross-sectional view of a cell main body along line II-II of FIG. 1, FIG. 3 is a cross-sectional view along line III-III of FIG. 1, and FIG. 4 is a plan view of an injection molding apparatus, excluding an upper mold of an insert mold, used in the injection molding method according to one or more embodiments of the present invention.

The injection molding apparatus 1 used in the injection molding method according to one or more embodiments of the present invention is an apparatus for providing elastic resin parts 21 each at a part of the outer circumference of a single battery cell 2 and comprises an insert mold 3 and a filling apparatus 4 (see FIG. 4).

The single battery cell 2 according to one or more embodiments of the present invention, as illustrated in FIG. 1, has a thin flat cell main body 22 and spacers 23.

As illustrated in FIG. 2, the cell main body 22 is configured such that a power-generating element 222 is housed in a pair of laminate film exterior members 221, which are sealed at an outer circumferential portion 223 of the housing space. Only one of the exterior members 221 is illustrated in FIG. 1 and the power-generating element 222 is illustrated in FIG. 2. As illustrated in the partially-enlarged view A of FIG. 2, laminate films that constitute each exterior member 221 are, for example, in a three-layer structure in which an inner resin layer 221a, intermediate metal layer 221b and outer resin layer 221c are arranged in this order from inside to outside of the single battery cell 2.

Examples of a material that constitutes the inner resin layer 221a include a film of resin, such as polyethylene, modified polyethylene, polypropylene, modified polypropylene and ionomer, which is excellent in the electrolyte resistance and fusion bonding properties. Examples of a material that constitutes the intermediate metal layer 221b include metal foil such as aluminum foil. Examples of a material that constitutes the outer resin layer 221c include a film of resin, such as polyamide-based resin and polyester-based resin, which is excellent in the electrical insulation.

Thus, each of the pair of exterior members 221 is, for example, formed of a material having flexibility, such as a resin-thin metal film laminate material, in which one surface (at the inner side of the single battery cell 2) of the intermediate metal layer 221b of aluminum foil or the like is laminated with a resin, such as polyethylene, modified polyethylene, polypropylene, modified polypropylene and ionomer, and the other surface (at the outer side of the single battery cell 2) is laminated with polyamide-based resin or polyester-based resin.

Each of the pair of exterior members 221 is provided with the intermediate metal layer 221b in addition to the inner and outer resin layers 221a and 221c thereby to allow the exterior members 221 themselves to have enhanced strength. Moreover, the inner resin layers 221a of the exterior members 221 are composed, for example, of a resin such as polyethylene, modified polyethylene, polypropylene, modified polypropylene and ionomer and it is thereby possible to ensure good fusion bonding properties with metallic electrode terminals 224 and 225.

The exterior members 221 according to the present invention are not limited to being in the above-described three-layer structure and may also be in a single-layer structure of either the inner resin layer 221a or outer resin layer 221c. In another embodiment, the exterior members 221 may be in a two-layer structure of either the inner resin layer 221a or outer resin layer 221c and the intermediate metal layer 221b. In still another embodiment, four or more-layered structure may be employed.

Each of the pair of exterior members 221 is formed into a bowl-like (plate-like) shape from a rectangular plate so that the power-generating element 222 can be housed therein. The exterior members 221 are assembled such that, after the power-generating element 222 and an electrolyte are put therein, respective outer circumferential portions 223 are overlapped with each other and the entire circumferences of the outer circumferential portions 223 are bonded by fusion bonding and/or using an adhesive.

The single battery cell 2 according to one or more embodiments of the present invention is a lithium-ion secondary battery and has the power-generating element 222 which is configured such that, as illustrated in FIG. 2, separators 222c are laminated between positive electrode plates 222a and negative electrode plates 222b. The power-generating element 222 as illustrated is composed of three positive electrode plates 222a, five separators 222c, three negative electrode plates 222b, and an electrolyte which is not particularly illustrated. The single battery cell 2 according to the present invention is not limited to the lithium-ion secondary battery and may also be, for example, an alkali storage battery such as a nickel-cadmium battery or other battery such as a lead storage battery.

Each positive electrode plate 222a which constitutes the power-generating element 222 has a positive electrode-side collector 222d that extends to the positive electrode terminal 224 and positive electrode layers 222e and 222f that are formed on both main surfaces of a part of the positive electrode-side collector 222d. In one or more embodiments of the present invention, the positive electrode plate 222a and the positive electrode-side collector 222d are formed of one conductor, but the positive electrode plate 222a and the positive electrode-side collector 222d may be configured as separate members and then bonded with each other.

The positive electrode-side collector 222d of the positive electrode plate 222a is composed, for example, of electrochemically stable metal foil such as aluminum foil, aluminum alloy foil, copper foil and nickel foil. The positive electrode layers 222e and 222f of the positive electrode plate 222a are formed, for example, through preparing a mixture of a positive electrode active material, a conductive agent, an adhesive and a solvent, applying the mixture to both main surfaces of the positive electrode-side collector 222d, and drying and flatting the mixture. Examples of the positive electrode active material include lithium composite oxide such as lithium nickelate (LiNiO₂), lithium manganate (LiMnO₂) and lithium cobaltate (LiCoO₂), and chalcogenide (of S, Se or Te). Examples of the conductive agent include carbon black. Examples of the adhesive include an aqueous dispersion of polytetrafluoroethylene.

Each negative electrode plate 222b which constitutes the power-generating element 222 has a negative electrode-side collector 222g that extends to the negative electrode terminal 225 and negative electrode layers 222h and 222i that are formed on both main surfaces of a part of the negative electrode-side collector 222g. In one or more embodiments of the present invention, the negative electrode plate 222b and the negative electrode-side collector 222g are formed of one conductor, but the negative electrode plate 222b and the negative electrode-side collector 222g may be configured as separate members and then bonded with each other.

The negative electrode-side collector 222g of the negative electrode plate 222b is composed, for example, of electrochemically stable metal foil such as nickel foil, copper foil, stainless steel foil and iron foil. The negative electrode layers 222h and 222i of the negative electrode plate 222b are formed, for example, through preparing a mixture of a primary material and a binder such as an acrylic resin emulsion, applying the mixture to both main surfaces of the negative electrode-side collector 222g, and drying and flattening the mixture. The primary material is obtained through preparing a negative electrode active material, such as amorphous carbon, non-graphitizable carbon, graphitizable carbon and graphite, which stores and releases lithium ions of the above positive electrode active material, mixing the negative electrode active material with an aqueous dispersion of styrene-butadiene rubber resin powder as an precursor material of an organic burned body, and drying and then crushing them so that a carbonized styrene-butadiene rubber is supported on the surfaces of carbon particles.

Each separator 222c, which is laminated between the positive electrode plate 222a and the negative electrode plate 222b, prevents short-circuiting therebetween and may have a function of holding an electrolyte. The separator 222c is a microporous membrane that is composed, for example, of polyolefin such as polyethylene and polypropylene, and also has a function of shutting off an excessive current so that the heat generation due to the excessive current blocks the holes in a layer. It is to be noted, however, that the separator 222c is not limited only to a single-layer membrane of polyolefin or the like. There can also be used a membrane of a three-layer structure in which a polyethylene membrane is interposed between laminated polypropylene membranes, or a membrane configured such that a microporous polyolefin membrane and an nonwoven organic fabric or the like are laminated. Making the separator 222c as a multilayer in such a manner can give various functions to the separator 222c, such as a function of preventing excessive current, a function of holding an electrolyte, and a function of maintaining the shape of separator 222c (enhancing the stiffness).

The above power-generating element 222 is configured such that the positive electrode plates 222a and the negative electrode plates 222b are laminated alternately via the separators 222c. The three positive electrode plates 222a are connected to the positive electrode terminal 224 of metal foil via the positive electrode-side collectors 222d. Similarly, the three negative electrode plates 222b are connected to the negative electrode terminal 225 of metal foil via the negative electrode-side collectors 222g.

As illustrated in FIG. 2, the positive electrode terminal 224 and the negative electrode terminal 225 are led out, respectively, from the positive electrode plates 222a and the negative electrode plates 222b of the power-generating element 222 to the external of the exterior members 221. In the single battery cell 2 as illustrated, the positive electrode terminal 224 and the negative electrode terminal 225 are led out side-by-side from the outer circumferential portion 223 of a side (the near shorter side in FIG. 1) of the exterior members 221. The positive electrode terminal 224 and the negative electrode terminal 225 are also referred to as a "positive electrode tab 224" and a "negative electrode tab 225," respectively.

In the single battery cell 2 as illustrated, the positive electrode terminal 224 and the negative electrode terminal 225 are led out side-by-side from the outer circumferential portion of a side of the exterior members 221. Therefore, FIG. 2 illustrates a cross-section along from the positive electrode plates 222a of the power-generating element 222 to the positive electrode terminal 224 and omits a cross section along from the negative electrode plates 222b of the power-generating element 222 to the negative electrode terminal 225, but the negative electrode plates 222b and the negative electrode terminal 225 are arranged in the same structure as that of the positive electrode plates 222a and positive electrode terminal 224 illustrated in the cross-sectional view of FIG. 2. The positive electrode plates 222a (positive electrode-side collectors 222d) and the negative electrode plates 222b (negative electrode-side collectors 222g) from the end part of the power-generating element 222 to the positive electrode terminal 224 and negative electrode terminal 225 are cut out half or more so as not to be in contact with each other in the plan view.

The cell main body 22 of the single battery cell 2 has a shape of rectangle in the plan view, so the outer circumferential portion 223 at which the pair of exterior members 221 is bonded to seal the inside is also referred to as outer circumferential portions 223a to 223d, as illustrated in FIG. 1. The outer shape of the cell main body 22 is not limited to rectangle and the cell main body 22 can also be formed in a square shape or in other polygonal shapes. The positive electrode terminal 224 and the negative electrode terminal 225 may be led out from one outer circumferential portion 223a as illustrated, but may also be led out from the opposing outer circumferential portions 223a and 223b, respectively, or from the opposing outer circumferential portions 223c and 223d, respectively. In an alternative embodiment, they may be led out from any of the outer circumferential portions 223c and 223d at the longer sides.

The cell main body 22 configured as the above can be used as a single cell, but can also be connected and combined with another one or more secondary batteries to be used as a secondary battery of a desired output and capacity (referred also to as a "battery module," hereinafter). Moreover, a plurality of such battery modules may be combined to provide a battery (referred also to as an "assembled battery," hereinafter) and the assembled battery can be mounted on a vehicle, such as an electric vehicle and hybrid vehicle, to be used as a power source for drive.

When a plurality of the cell main bodies 22 is connected to constitute a battery module, the cell main bodies 22 are housed in a battery case (not illustrated) so as to be stacked on one another at their main surfaces. In this case, the spacers 23 composed of an insulating material are used for various purposes, such as for ensuring the insulation properties between the positive electrode terminal 224 and negative electrode terminal 225 led out from the outer circumferential portion 223a of one cell main body 22 and those of another cell main body 22 stacked on the one cell main body 22, disposing one or more bus bars for connecting these positive electrode terminals 224 and negative electrode terminals 225 in series and/or in parallel, and disposing a connector of a sensor for detection of voltage.

When two or more cell main bodies 22, 22 are stacked, the spacers 23 as illustrated are disposed between the outer circumferential portions 223a and 223a of these cell main bodies 22, 22. The spacers 23 have through-holes for fixation 231 that are to fix the cell main bodies 22, 22 to predetermined installation positions, such as in a battery module case and on the vehicle body of a vehicle.

Each spacer 23 is composed of an insulating resin material having stiffness, such as polybutylene terephthalate (PBT) and polypropylene (PP), and formed into an elongate shape having a longer length than that of the outer circumferential portion 223a of the cell main body 22. Both ends of the spacer 23 are each formed with a through-hole for fixation 231 that is in a casing-like shape. The length of the spacer 23 is preferably equal to or longer than that of the outer circumferential portion 223a to which the spacer 23 is attached.

Mechanical strength (stiffness such as bending strength and buckling strength) of the spacers 23 formed of PBT or PP as the above is preferably set higher than that of the electrode plates (the above-described positive electrode plates 222a and negative electrode plates 222b) which constitute the power-generating element 222 housed in the cell main body 22. This is because, if a considerably excessive force acts on the spacers 23 of the single battery cell 2 mounted on a vehicle or the like, when the spacers 23 and the power-generating element 222 come into contact with each other so that they are likely to collapse, the spacers 23 are made less likely to collapse thereby to ensure the retention stability of the single battery cell 2.

In the single battery cell 2 according to one or more embodiments of the present invention, as illustrated in FIG. 3, elastic resin parts 21 are provided so as to cover the sides 223c and 223d (outer circumferential portions at the longer sides), to which the spacers 23 are not attached, of the outer circumferential portion 223 of the cell main body 22 and also to cover corner parts that are located at end parts of the sides 223c and 223d. These elastic resin parts 21 are formed by insert molding of a resin material. Examples of a material that constitutes the elastic resin parts 21 include elastic resin materials, such as vulcanized rubber, thermoset resin elastomer, thermoplastic resin elastomer and polyamide-based resin (hot-melt grade). In an alternative embodiment, the elastic resin part 21 may be formed all around the outer circumferential portion 223.

An end part of each elastic resin part 21 is provided at a position corresponding to the position at which the spacer 23 is fixed to the outer circumferential portion 223a of the cell main body 22, as illustrated in FIG. 1. When an external force applied to the through-hole for fixation 231 of the spacer 23, such as due to vehicle vibration, is transmitted from the spacer 23 to the outer circumferential portion 223a of the cell main body 22, it causes the elastic resin part 21 itself to generate a buffering force, which can mitigate the external force transmitted to the cell main body 22.

The insert mold 3 for forming the elastic resin parts 21 has a lower mold 31 and an upper mold 32 that corresponds to the lower mold 31. The lower mold 31 and the upper mold 32 are composed of a material excellent in the thermal conductivity. Examples of such a material include metallic materials.

As illustrated in FIG. 4, the lower mold 31 of the insert mold 3 has an approximately rectangular shape in the plan view and the approximate center of the lower mold 31 is formed with a recessed part 310 that corresponds to the three-dimensional shape of the single battery cell 2. In the lower mold 31, locating pins 312 are provided at positions corresponding to the through-holes for fixation 231 of the spacers 23. When the single battery cell 2 is set in the recessed part 310, the locating pins 312 are inserted into the through-holes for fixation 231 thereby to define the coarse position of the single battery cell 2 in the lower mold 31.

The lower mold 31 is provided with pressing cylinders 311 for finely defining the position of the single battery cell 2 during the molding. Each pressing cylinder 311 has a driving mechanism using an air cylinder, hydraulic cylinder or motor, for example, and this mechanism drives a rod part 311a to press against the single battery cell 2, which is thereby defined at a predetermined position. In one or more embodiments of the present invention, four pressing cylinders 311 are disposed at positions corresponding to the locating pins 312, as illustrated in FIG. 4, but the number and arrangement of the pressing cylinders 311 are not particularly limited thereto.

In addition, longer-side parts 310a (parts corresponding to the outer circumferential portions 223c and 223d of the cell main body 22) of the recessed part 310 of the lower mold 31 are provided with respective groove parts 313 for defining molding cavities C that are to form the elastic resin parts 21. Approximate central parts of the groove parts 313 are formed with respective depression parts 314 each having a semicircular cross-section. The diameter of the depression parts 314 increases toward outside of the lower mold 31.

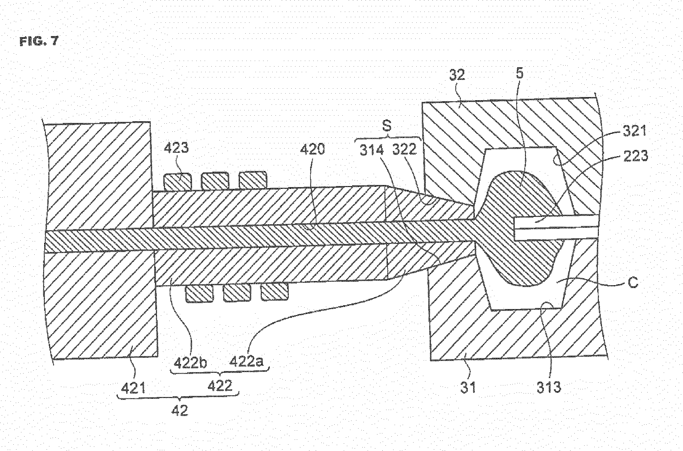

The upper mold 32 of the insert mold 3 has a shape corresponding to that of the above-described lower mold 31 and is also formed with groove parts 321 and depression parts 322 corresponding, respectively, to the groove parts 313 and depression parts 314 of the lower mold 31 (see FIG. 7). Each set of the depression parts 314 and 322 constitutes a sprue S (inlet) for injecting a molten resin 5 into a molding cavity C that is defined by each set of the groove parts 313 and 321. The sprue S constituted by the depression parts 314 and 321 has a tapered shape (second tapered shape) that is tapered from outside toward inside of the insert mold 3. This tapered shape corresponds to the shape of a nozzle 422 of the filling apparatus 4, which will be described below.

The filling apparatus 4, which is an apparatus for injecting the molten resin 5 into the molding cavities C of the insert mold 3, has a resin material supplier 41 and injectors 42, as illustrated in FIG. 4.

The resin material supplier 41 has a heating device 411, which heats the resin material (to a temperature of 160°C to 230°C, for example). The resin material supplier 41 further has a gear pump 412, which has a function of extruding the molten resin 5, obtained by being heated using the heating device 411, under a predetermined condition (e.g. a pump rotating speed of 10 rpm to 90 rpm and an extrusion pressure of 2.0 MPa to 6.5 MPa). The molten resin 5 extruded from the resin material supplier 41 is supplied to the injectors 42 via heat hoses 43.

Each injector 42 has a main body part 421 and a nozzle 422 that is provided on the main body part 421. The nozzle 422 is formed therein with a flow path 420 in which the molten resin 5 passes through (see FIG. 7). The nozzle 422 is composed of a conical front end part 422a and a straight cylindrical rear end part 422b and the maximum outer diameter of the front end part 422a is equal to the outer diameter of the rear end part 422b (see FIG. 7). The front end part 422a has a tapered shape (first tapered shape) that is tapered toward the front end (the side facing the molding cavity C). The first tapered shape of the front end part 422a of nozzle 422 and the second tapered shape of the sprue S constituted by the depression parts 314 and 321 of the insert mold 3 are those which correspond to each other. The molten resin 5 supplied from the resin material supplier 41 passes through the flow path 420 in the nozzle 422 and is then extruded from the front end part 422a into the molding cavity C.

The rear end part 422b of nozzle 422 of the filling apparatus 4 according to one or more embodiments of the present invention is provided with a heating device 423, which can heat the molten resin 5 passing through the flow path 420 of the nozzle 422. Examples of such a heating device 423 include a coil heater and infrared heater. In one or more embodiments of the present invention, the location at which the nozzle 422 is provided with the heating device 423 is not particularly limited, but the heating device 423 is preferably provided only at the rear end part 422b of nozzle 422 as illustrated, in view of reducing the manufacturing cycle of the molded article.

In addition, temperature sensors (not illustrated) are attached to the front end part 422a and rear end part 422b of the nozzle 422 and the temperatures of the front end part 422a and rear end part 422b can be constantly measured by the temperature sensors.

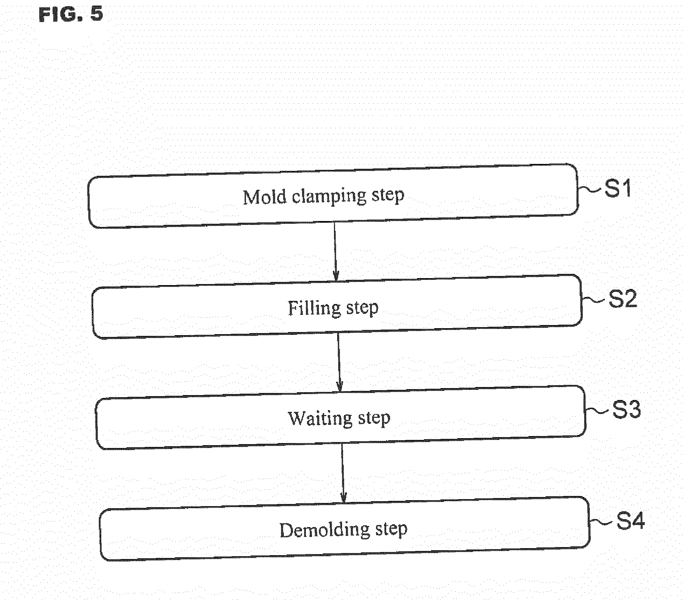

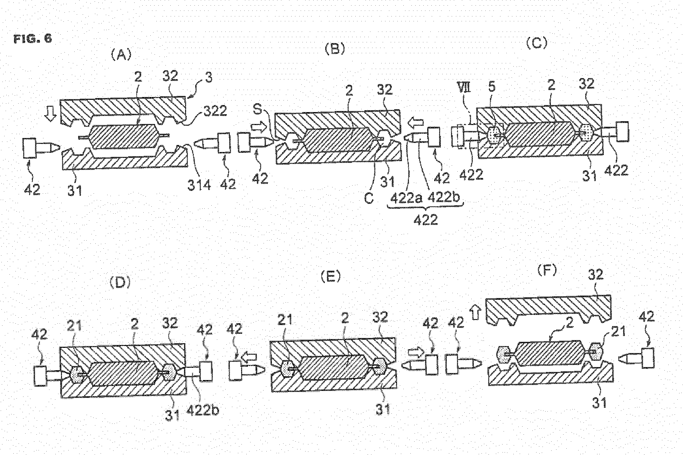

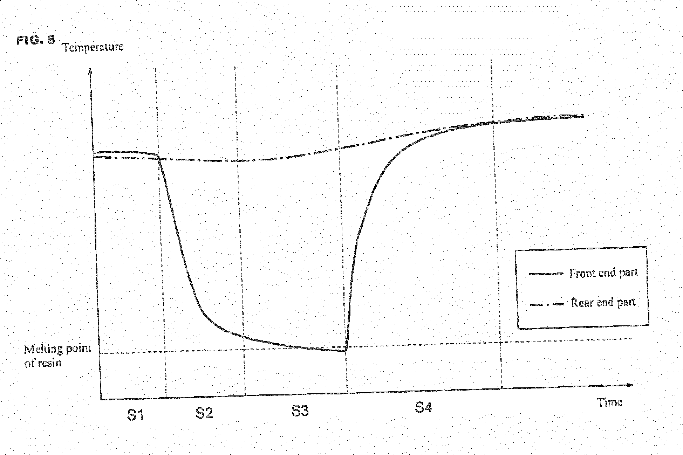

Next, the injection molding method according to one or more embodiments of the present invention will be described. FIG. 5 is a flowchart illustrating the injection molding method according to one or more embodiments of the present invention, FIG. 6(A) to FIG. 6(F) are cross-sectional views for explaining the operation of the injection molding apparatus 1, FIG. 7 is an enlarged view of area VII of FIG. 6(C), and FIG. 8 is a graph illustrating the temperature change of a nozzle in the filling apparatus.

First, as illustrated in FIG. 6(A), the single battery cell 2 is set in the recessed part 310 of the lower mold 31 of the insert mold 3. The upper mold 32 is set on the lower mold 31 and pressed against the lower mold 31 at a predetermined pressing force thereby to perform mold clamping (mold clamping step S1 is FIG. 5). During this operation, the temperature of the insert mold 3 is lower than the melting point of the molten resin 5 with which the molding cavities C are filled.

Then, as illustrated in FIG. 6(B), the front end part 422a of each nozzle 422 of the filling apparatus 4 is inserted into and pressed against the sprue S which is constituted by the depression part 314 of the lower mold 31 of the insert mold 3 and the depression part 322 of the upper mold 32. Thereafter, as illustrated in FIG. 6(C), the molten resin is injected from the front end of nozzle 422 into the molding cavity C which is defined by the groove part 313 of the lower mold 31 and the groove part 321 of the upper mold 32 (filling step S2 in FIG. 5). During this operation, as illustrated in FIG. 7, the first tapered shape formed on the front end part 422a of nozzle 422 is in close contact with the second tapered shape of the sprue S and the front end part 422a of nozzle 422 is in a state of directly facing the end part of molding cavity C at the side of that nozzle 422.

After the molding cavity C is filled with the molten resin 5, as illustrated in FIG. 6(D), the process waits in a state in which the front end of nozzle 422 remains pressed against the sprue S (waiting step S3 in FIG. 5) and the molten resin 5 is cooled to become solidified thereby to form the elastic resin part 21. During this operation, the front end part 422a of nozzle 422 remains in contact with the insert mold 3 and the heat of the front end part 422a is thereby transmitted to the insert mold 3 to rapidly reduce the temperature of the front end part 422a. On the other hand, as illustrated in FIG. 8, the rear end part 422b of nozzle 422 remains heated to a temperature equal to or higher than the melting point by the heating device 423 provided on the nozzle 422.

Subsequently, when the temperature of the front end part 422a of nozzle 422 becomes equal to or lower than the melting point of the resin material which constitutes the elastic resin part 21, the injector 42 is released from the insert mold 3 (see FIG. 6(E)). Then, the upper mold 32 of the insert mold 3 is separated from the lower mold 31 to demold the single battery cell 2 (demolding step S4 in FIG. 5). The single battery cell 2 formed with the elastic resin parts 21 can thus be obtained.

Next, the action of the injection molding method according to one or more embodiments of the present invention will be described.

In the injection molding method according to one or more embodiments of the present invention, after the molding cavities C of the insert mold 3 are filled with the molten resin 5 (filling step), the process waits in a state in which the front end parts 422a of nozzles 422 remain pressed against the sprues S until the temperature of the front end parts 422a of nozzles 422 becomes equal to or lower than the melting point of the resin material (waiting step). This operation can immediately cool the front end parts 422a of nozzles 422 to rapidly solidify the molten resin 5 in the vicinities of the sprues S and can therefore prevent foams from being mixed into the resin material when the nozzles 422 are released from the insert mold 3.

Moreover, the front end parts 422a of nozzles 422 of the filling apparatus 4 according to one or more embodiments of the present invention each have a first tapered shape that is tapered, and the shape of each sprue S (inlet) is also a second tapered shape that corresponds to the first tapered shape. This structure can enhance the close contact ability between the front end parts 422a of nozzles 422 and the sprues S during the filling step and allows the heat of the front end parts 422a of nozzles 422 to readily be transmitted to the insert mold 3. Therefore, the cooling of the front end parts 422a of nozzles 422 can be efficiently performed after the molding cavities C are filled with the molten resin 5. This efficient cooling can more steadily prevent foams from being mixed into the resin material when the nozzles 422 are released from the insert mold 3. In addition, the manufacturing cycle of the molded article can be reduced because the cooling time for the front end parts 422a of nozzles 422 can be reduced.

Furthermore, in one or more embodiments of the present invention, the heating devices 423 heat only the rear end parts 422b of nozzles 422. Therefore, the cooling of the front end parts 422a of nozzles 422 can be more efficiently performed to further enhance the above effects.

While the resin material is cooled after the molding cavities C are filled with the resin melting point of the resin material by the heating devices 423 (see FIG. 8). Therefore, when the molding of the elastic resin parts 21 is completed and another set of elastic resin parts 21 is subsequently molded, the resin material in the flow paths 420 of nozzles 422 can be efficiently heated thereby to further enhance the reduction in the manufacturing cycle of the molded end parts 422a of nozzles 422 are allowed to directly face the end parts of molding cavities C and the provision of runner parts and gate parts in the mold can be omitted. Therefore, the yield of resin material used in the injection molding can be improved.

Embodiments heretofore explained are described to facilitate understanding of the present invention and are not described to limit the present invention. Therefore, it is intended that the elements disclosed in the above embodiments include all design changes and equivalents to fall within the technical scope of the present invention as it is defined in the appended claims.
- 32: Upper mold
- 321: Groove part
- 322: Depression part
- C: Molding cavity
- S: Sprue
- 4: Filling apparatus
- 41: Resin material supplier
- 411: Heating device
- 412: Gear pump
- 42: Injector
- 421: Main body part
- 422: Nozzle
- 422a: Front end part
- 422b: Rear end part
- 423: Heating device
- 43: Heat hose
- 5: Molten resin
- S1: Mold clamping step
- S2: Filling step
- S3: Waiting step
- S4: Demolding step

## Claims

1. An injection molding method **characterized in** comprising:
filling a molding cavity (C) of a mold (3) with a resin material (5) in a molten state from a nozzle (422) after pressing the nozzle of which at least a part is heated against an inlet (S) of the mold (3);
constantly measuring a temperature of a front end (422a) of the nozzle;
waiting until the temperature of the front end (422a) of the nozzle becomes equal to or lower than a melting point of the resin material in a state in which the nozzle (422) remains pressed against the inlet and the front end (422a) of the nozzle (422) remains in contact with the resin material after filling the molding cavity (C) with the resin material (5); and
releasing the nozzle (422) from the inlet (S) after the temperature of the front end (422a) of the nozzle (422) becomes equal to or lower than the melting point of the resin material (5), wherein
the front end (422a) of the nozzle (422) directly faces an end part of the molding cavity (C) when pressing the nozzle (422) against the inlet of the mold (3), and
only a rear end part (422b) of the nozzle (422) is heated when pressing the nozzle (422) against the inlet of the mold (3) and filling the molding cavity of the mold (3) with the resin material.

2. The injection molding method according to claim 1 further comprising:
setting a single battery cell (2) in the mold (3), the single battery cell (2) having a power-generating element (222) housed in a pair of exterior members (221), wherein
the molding cavity (C) is formed in a shape corresponding to a shape that surrounds at least a part of outer circumference (223) of the single battery cell (2).

3. The injection molding method according to claim 1 or 2, wherein the front end (422a) of the nozzle (422) is formed in a first tapered shape that is tapered, and the inlet is formed in a second tapered shape that corresponds to the first tapered shape.

4. The injection molding method according to claim 2, wherein
each of the pair of exterior members (221) is formed from a rectangular plate, and the pair of exterior members (221) is sealed at an outer circumferential portion.

## Patentansprüche

1. Spritzgießverfahren, **dadurch gekennzeichnet, dass** es umfasst:
Füllen eines Formhohlraums (C) einer Form (3) mit einem Kunststoffmaterial (5) in einem geschmolzenen Zustand über eine Düse (422), nachdem die Düse, von der wenigstens ein Teil erhitzt ist, an einen Einlass (S) der Form (3) gepresst worden ist;
konstantes Messen einer Temperatur eines vorderen Endes (422a) der Düse;
Warten, bis die Temperatur des vorderen Endes (422a) der Düse einen Schmelzpunkt des Kunststoffmaterials erreicht oder unterschreitet, in einem Zustand, in dem die Düse (422) weiter an den Einlass gepresst wird und das vordere Ende (422a) der Düse (422) in Kontakt mit dem Kunststoffmaterial bleibt, nachdem der Formhohlraum (C) mit dem Kunststoffmaterial (5) gefüllt worden ist; und
Lösen der Düse (422) von dem Einlass (S), nachdem die Temperatur des vorderen Endes (422a) der Düse (422) den Schmelzpunkt des Kunststoffmaterials (5) erreicht oder unterschritten hat, wobei
das vordere Ende (422a) der Düse (422) direkt einem Endteil des Formhohlraums (C) zugewandt ist, wenn die Düse (422) an den Einlass der Form (3) gedrückt wird, und
nur ein hinterer Endteil (422b) der Düse (422) erhitzt wird, wenn die Düse (422) an den Einlass der Form (3) gedrückt wird und der Formhohlraum der Form (3) mit dem Kunststoffmaterial gefüllt wird.

2. Spritzgießverfahren nach Anspruch 1, das des Weiteren umfasst:
Einsetzen einer einzelnen Batteriezelle (2) in die Form (3), wobei die einzelne Batteriezelle (2) ein Energieerzeugungs-Element (222) aufweist, das in einem Paar äußerer Elemente (221) aufgenommen ist, wobei
der Formhohlraum (C) in einer Form ausgebildet ist, die einer Form entspricht, die wenigstens einen Teil des Außenumfangs (223) der einzelnen Batteriezelle (2) umgibt.

3. Spritzgießverfahren nach Anspruch 1 oder 2, wobei das vordere Ende (422a) der Düse (422) in einer ersten konischen Form ausgebildet ist, die konisch ist, und der Einlass in einer zweiten konischen Form ausgebildet ist, die der ersten konischen Form entspricht.

4. Spritzgießverfahren nach Anspruch 2, wobei
jedes der paarigen Außenelemente (221) aus einer rechteckigen Platte besteht, und die paarigen Außenelemente (221) an einem Außenumfangsabschnitt abgedichtet sind.

## Revendications

1. Procédé de moulage par injection **caractérisé en ce qu'**il comprend :
le remplissage de la cavité de moulage (C) d'un moule (3) par un matériau de résine (5) à l'état fondu à partir d'une buse (422) après avoir pressé la buse, dont au moins une partie est chauffée, contre un orifice d'entrée (S) du moule (3),
la mesure constante de la température de l'extrémité avant (422a) de la buse,
l'attente, jusqu'à ce que la température de l'extrémité avant (422a) de la buse devienne inférieure ou égale au point de fusion du matériau de résine, dans un état tel que la buse (422) reste pressée contre l'orifice d'entrée et que l'extrémité avant (422a) de la buse (422) reste en contact avec le matériau de résine après avoir rempli la cavité de moulage (C) par le matériau de résine (5), et
la libération de la buse (422) de l'orifice d'entrée (S) après que la température de l'extrémité avant (422a) de la buse (422) est devenue inférieure ou égale au point de fusion du matériau de résine (5), dans lequel
l'extrémité avant (422a) de la buse (422) fait directement face à une extrémité de la cavité de moulage (C) lorsque la buse (422) est pressée contre l'orifice d'entrée du moule (3), et
seule une partie d'extrémité arrière (422b) de la buse (422) est chauffée lors du pressage de la buse (422) contre l'orifice d'entrée du moule (3) et du remplissage de la cavité de moulage du moule (3) par le matériau de résine.

2. Procédé de moulage par injection selon la revendication 1, comprenant en outre :
le positionnement d'un élément de batterie simple (2) dans le moule (3), l'élément de batterie simple (2) comportant un élément de génération de puissance (222) logé dans une paire d'éléments extérieurs (221), dans lequel
la cavité de moulage (C) prend une forme correspondant à la forme qui entoure au moins une partie de la circonférence externe (223) de l'élément de batterie simple (2) .

3. Procédé de moulage par injection selon la revendication 1 ou la revendication 2, dans lequel l'extrémité avant (422a) de la buse (422) prend une première forme conique qui va en s'effilant, et l'orifice d'entrée prend une seconde forme conique qui correspond à la première forme conique.

4. Procédé de moulage par injection selon la revendication 2, dans lequel :
chacun de la paire d'éléments extérieurs (221) est formé à partir d'une plaque rectangulaire, et la paire d'éléments extérieurs (122) est scellée au niveau d'une partie de la circonférence externe.
